# EUROPEAN PATENT APPLICATION

(11) **EP 4 109 893 A1**
(43) Date of publication of application: **28.12.2022**
(21) Application number: 21181035.3
(22) Date of filing: 23.06.2021
(51) Int. Cl.: H04N 7/18, H04N 5/247, G06T 7/292, H04N 21/8549, H04N 21/218, H04N 5/232, H04N 21/8547

(54) **SYSTEM AND METHOD OF RECORDING A VIDEO OF A MOVING OBJECT**

(71) Applicant: Swiss Timing Ltd, 2606 Corgémont (CH)
(72) Inventor: VOELKER, Christian, 06686 Luetzen-Kreischau (DE); SCHURICHT, Lars, 04159 Leipzig (DE)
(74) Representative: ICB SA

(57) **Abstract**

The disclosure concerns a video recording system (10) configured for capturing an object (5) moving along a path (1) comprising numerous path sections (2, 3, 4), the video recording system (10) comprising:
- a first camera (11) operable to capture the object (5) while moving along a first path section (2) of the path (1),
- a second camera (12) operable to capture the object (5) moving along a second path section (3) of the path (1),
- an acquisition unit (31) connected to the first camera (11) and connected to the second camera (12), the acquisition unit (31) being operable to capture a first video stream (51) from the first camera (11) during a first time interval and to capture a second video stream (51') from the second camera (12) during a second time interval.

## Description

### Field of the invention

The present invention relates to a video recording system for capturing an object moving along a path. In a further aspect the invention relates to a method of recording a video sequence of an object moving along a path and in a further aspect the invention relates to a respective computer program for recording or capturing an object moving along a path.

### Background of the invention

For some sports activities, it is desirable to analyze a movement of an object or of an athlete over a comparatively long distance. For instance, with ski jumping and with respect to a comparatively long path between the starting point and a landing point of an athlete it is almost impossible to capture the entire movement of the athlete with only one camera. For analyzing training and competition jumps, especially the flight phase of a ski jumper coaches or trainers are obliged to manually record a video, e.g. using a handheld camera. Manually recorded handheld videos are often of poor quality and they do not provide a uniform format for an easy and straightforward analysis of a ski jump. It is even rather cumbersome to identify an individual athlete during in a series of recorded ski jumps and to distinguish between different jumps or attempts of the same or different athletes. Hence, editing of video sequences taken during numerous jumps of a ski jumper is rather elaborate.

It is therefore desirable to provide an improved video recording system that is capable to cover the entire ski jump including numerous phases of a ski jump, i.e. in-run, take off, flight phase and landing. It is further desirable to provide a standardized video recording scheme that allows for an easy and straightforward comparison of different ski jumps. Moreover, it would be desirable to provide supplemental data and information with regard to the object illustrated in a captured video stream.

### Summary of the invention

The above-mentioned technical problems are effectively solved by a video recording system, by a method of recording a video sequence and by a computer program configured for a video recording system in accordance to the features of the independent claims. Numerous embodiments of the invention are subject matter of dependent claims.

In a first aspect, there is provided a video recording system configured for capturing an object moving along a path. The path comprises numerous path sections. The numerous path sections constitute the path and/or can be combined to form the path. The video recording system comprises a first camera, a second camera and an acquisition unit connected to the first camera and connected to the second camera. The first camera is operable or configured to capture the object while moving along a first path section of the path. Likewise, the second camera is operable or configured to capture the object while moving along a second path section of the path. The first path section may join the second path section typically along a direction of movement of the object along the path. Hence, the first path section is first a subsection of the path and the second path section is a second subsection of the path. The first and second path sections may adjoin in a non-overlapping or in an at least partially overlapping way.

The acquisition unit is operable to capture a first video stream from the first camera during a first time interval. The acquisition unit is further operable to capture a second video stream from the second camera during a second time interval. The first and the second time intervals do not temporally overlap. The second time interval adjoins the first time interval. Typically, the second time interval directly follows the first time interval, i.e. without any temporal gap therebetween.

With some examples, the acquisition unit or a controller of the video recording system is operable to switch between image acquisition from the first camera and image acquisition from the second camera. In this way, it is provided, that the object moving along the path is recorded or captured by the first camera while moving along the first path section. Typically, the first time interval is the time interval required by the object for moving along or through the entire first path section. Concurrently, the second time interval is the time interval during which the object moves along and across the second path section.

By recording or capturing the moving object by the first camera during the first time interval the object is effectively captured by the first camera while it moves along the first path section. During the first time interval the first camera captures a first video stream. As the object leaves the first path section and enters the second consecutive path section the acquisition unit may switch to the second camera and may this capture a second video stream during the subsequent second time interval.

In this way, a rather long or large path equipped with at least a first camera and a second camera can be completely covered by the video recording system. As long as the object travels or moves along the first path section it is captured by the first camera. At least during the first time interval, the first video stream provided by the first camera is used by the acquisition unit and is effectively acquired. During a subsequent second time interval and as the object travels of moves along the second path section the second camera is used to capture or to record the second video stream. In other words, during the second time interval, the second video stream as provided by the second camera and capturing the object while moving along the second path is effectively used.

Typically, the first camera and the second camera are positioned along the path. The first camera and the second camera are spatially separated by a predefined non-zero distance along the path.

According to a further embodiment, the acquisition unit is operable to generate a final video sequence by merging or concatenating the first video stream and the second video stream. Typically, at least the first video stream and the second video stream form or constitute the final video sequence. Here, the first video stream and the second video stream are concatenated or merged in the time domain. Hence, the first video stream is followed by the second video stream.

By merging or concatenating multiple video streams each of which being indicative of the moving object along a respective path sections, there can be provided a final video sequence comprising numerous video streams, each of which representing movement of the object along a predefined path section of the complete path. This way, there can be provided a final video sequence in a reproducible way with high quality and capturing or covering the movement of an object along the entire path. This even applies to a large number of objects all moving or being moved along the same path one after the other.

Here, for each object there can be provided a final video sequence, wherein numerous video sequence are automatically generated effectively the same way and thus being highly similar. Such a multitude of video sequences enables a direct and intuitive comparison, e.g. for training competition optimization purpose. This is of particular advantage or analyzing numerous ski jumps performed by the same or different ski jumping athletes.

With a further example, the video recording system comprises a camera controller connected to the first camera and connected to the second camera. The camera controller is operable to control operation of the first camera and the second camera. The camera controller may be operable to switch on and/or to switch off at least one of the first camera and the second camera. With some examples, the camera controller may be operable to control a signal path between the first camera and the acquisition unit and between the second camera and the acquisition unit.

With some examples, the camera controller may provide a switch or a hub by way of which signals provided by the first camera and by the second camera can be selectively transmitted to the acquisition unit. By way of the camera controller a signal input of the acquisition unit can be switched between video signals provided by the first camera and video signals provided by the second camera. With some examples, the camera controller may be controlled by the acquisition unit or by a controller of the video recording system so as to process video signals or video streams from the first camera or from the second camera, respectively.

With some examples, the camera controller may be configured to actively control operation of the first camera and/or of the second camera. With some examples, at least one of the first camera and the second camera is movable, pivotable, zoomable or tiltable by the camera controller. With an active control of at least one of the first camera or second camera by the camera controller image acquisition and hence capturing video streams by the first camera and/or by the second camera can be optimized.

According to a further example, the video recording system comprises a motion detector being operable to gather motion data of the object. Motion data may comprise at least one of a position, an orientation, a velocity and an acceleration of the object when moving along the path. The motion detector may be implemented in many different ways.

With some examples, the motion detector may be camera based. Here, motion detection of the object may be conducted simply by identification of the object in the video stream as provided by one of the first camera and the second camera. Here, the motion detector may be implemented by software and may be based on image or video stream analysis.

With other examples, the motion detector is implemented by radar technology, wherein signals transmitted by a transponder are reflected by the moving object. With other examples, the motion detector comprises a transmitter configured to actively communicate with a portable electronic tag attached or attachable to the moving object. With further examples, distance and/or position measuring technologies such as ultra wideband distance (UWB)-based measuring, triangulation-based distance or position measurement as well as time-of-flight based measurement schemes may be implemented. Moreover, also a wireless communication link between a portable electronic tag attached to the moving object and a stationary transponder connected to or implemented in the motion detector can be implemented.

Typically, the motion detector is operably connected to the acquisition unit and/or to the camera controller. In this way, motion data of the object can be further used to optimize acquisition of the first and the second video streams and/or to optimize switching between the first and the second video streams for generating the final video sequence.

According to a further example, the motion detector is operably connected with at least one of the acquisition unit and the camera controller to control capturing of the first video stream and of the second video stream on the basis of the motion data of the object. In this way, image or video capturing can be optimized. It may be guaranteed, that the duration of the first video stream and/or of the second video stream matches with the time interval required by the object to move along the first path section and the second path section, respectively.

In effect, and by connecting the camera controller to the acquisition unit, there can be provided respective motion data of the object to the acquisition unit. Hence, the acquisition unit is provided with information about the absolute position, the orientation, the velocity and/or of the acceleration of the object while moving along the path. In this way, the acquisition unit is provided with information at which time the moving object enters and leaves these at least one of the second and the first path sections.

This enables a precise switching between the first video stream as provided by the first camera and the second video stream as provided by the second camera for generating the final video sequence. This way a rather intelligent and automated switching between images or video streams of the first camera and images or video streams from the second camera can be provided.

Typically, switching from the first video stream to the second video stream in the final video sequence coincides with a transition of the moving object from the first path section to the second path section. In the final video sequence, the moving object can be seamlessly and permanently illustrated.

With some examples, the connection between the camera controller and the acquisition unit is also beneficial to at least temporally deactivate operation of at least one of the first camera or the second camera. In situations, wherein the motion detector determines that the object moves along the first path, the respective motion information can be used by the camera controller and/or by the acquisition unit to at least temporally deactivate generation of a second video stream by the second camera.

Generation or capturing of the second video stream may be activated only when the moving object approaches the second path section or enters the second path section. Then, and as the first video stream as provided by the first camera may be no longer of use the camera controller and/or the acquisition unit may at least temporally deactivate operation of the first camera or may disregard respective video signals from the first camera.

With an at least temporal deactivation of one of the cameras, the amount of digital data provided by the first and second cameras can be effectively reduced. Hence, network traffic in a network connecting numerous cameras and a controller of the video recording system can be effectively reduced. Traffic load in the network between the cameras, the camera controller or acquisition unit can be effectively reduced, thus enabling use of cost-efficient hardware solutions for network components and cameras.

By way of the motion detector at least one of the cameras of the video recording system can be at least temporally deactivated, namely when the moving object has left a respective path section covered by the respective camera. In this way, data traffic between the cameras, the acquisition unit and the camera controller can be effectively reduced and the performance of the video recording system can be improved.

According to a further example, the motion detector is operably connected to the camera controller. Moreover, at least one of the first camera and the second camera is at least one of movable, pivotable, zoomable or tiltable by the camera controller. This way, the camera controller and a respective camera may follow the object on the basis of motion data as provided by the motion detector. Here, at least one specific camera configuration, hence a camera position, a camera orientation and a zoom effect of the camera may be actively controlled by the camera controller on the basis of the motion data as provided by the motion detector. In this way, the camera may automatically follow the object as it moves along at least one of the first and the second path section of the path.

By making use of an actively controllable camera, e.g. a camera provided with an electromechanical drive so as to tilt, to pivot or to zoom the camera a respective area of coverage of the camera can be increased. Hence, the respective path section to be covered or to be entirely captured by the camera can be increased. In this way, the total number of cameras required to cover the entire path along which the object moves can be effectively reduced.

According to a further example, the acquisition unit is operably connected to the motion detector. Furthermore, the acquisition unit is operable to produce an image overlay comprising motion data of the object extracted from the motion detector. The acquisition unit is further operable to add the image overlay in at least one of the first video stream, the second video stream and the final video sequence, respectively. In this way, the respective video stream can be embedded with supplemental data being representative of the motion data of the object. Here at least one of a velocity (total or x, y and z directions), a position, a height over ground, ski angles (opening angle, roll angle, angle of Attack) and an acceleration (x, y and z directions) of the object can be visually embedded in the respective video stream or video sequence.

The respective motion data as captured by the motion detector may be dynamically or constantly updated with refreshed motion data as provided by the motion detector. In this way, real-time information being indicative of at least one of a position, an orientation, a velocity or acceleration (see remarks above) of the object can be overlaid with the integrated into the respective video stream. In this way, the video stream can be provided with supplemental real-time information about the momentary status or motion data of the object illustrated in the video stream.

According to another example, the motion detector is operable to capture motion data of a portable electronic tag connectable to the moving object. The portable electronic tag may be implemented as a passive or active tag thus allowing to determine at least one of a position, an orientation, a velocity and an acceleration of the electronic tag relative to the motion detector. Typically, the portable electronic tag may be worn by the athlete. With some examples, the portable electronic tag may be attached to sports gear or sports equipment. With some examples and for instance with ski jumping, the portable electronic tag may be attached to the ski or to the ski binding.

With some examples, there may be provided a first tag in or on a first ski and a second portable electronic tag in or on a second ski. This way, there may be gathered individual motion data of a left ski and of a right ski of a ski jumper. In this way there may be even provided detailed information about the position, orientation and an angle of each ski individually and relative to each other as well as relative to a position or orientation of the athlete.

According to a further example, the portable electronic tag comprises a transponder operable to exchange data and/or to exchange signals wirelessly with the motion detector. Here, the portable electronic tag is implemented as an active tag. It may comprise a transponder for wireless communication with the stationary motion detector. They may be provided a one- or bidirectional communication link between the transponder of the portable electronic tag and a corresponding transponder of the motion detector.

With some examples, the portable electronic tag comprises a processor or processing unit as well as an electronic storage. The storage may be implemented as a non-volatile storage and may comprise a unique identifier, by way of which the portable electronic tag can be identified when communicating with the motion detector. In this way the motion data may also include a unique identifier of a portable electronic tag thus enabling to identify a respective athlete or respectively gear in the respective video stream.

Of course and in this way, respective identification information, e.g. the name or nationality of a particular athlete may be included in the image overlay as provided by the acquisition unit on the basis of the motion data captured at or provided by the motion detector.

According to a further example, the motion detector is operably connected to at least one or several wireless receivers arranged along the path and being operable to exchange data with the portable electronic tag. Typically, there is provided at least a first receiver at or along the first path section and there is provided at least a second receiver at or along the second path section. The number of receivers provided at or along the first path section and the number of receivers provided at or along the second path section may vary and may depend on the constitution or configuration of the respective path section.

For instance, with ski jumping and when the first path section substantially coincides with the inrun portion of the path there may be provided only one or a few receivers to determine the momentary velocity or position of the object. Here, the object can only move a along a predefined track as provided by the ski jumping hill. Here, and as the object moves along the first path section it is limited with regards to its freedom of movement. After takeoff and during the flight phase there may be typically provided numerous receivers each of which being connected to the motion detector in order to capture a multi-dimensional movement and/or orientation and/or rotational of the moving object. The same may apply to the landing area.

Typically and according to another example, the video recording system is not limited to only a first and second path section of the path. There may be provided numerous, e.g. three or four or even more separate path sections that constitute the entire path along which the object will move. For each of the paths there may be provided individual receivers by way of which motion data can be captured. With some examples, the receivers of the motion detector may not coincide with the subdivision of the paths into numerous path sections.

According to a further example, the video recording system further comprises a database connected to the acquisition unit. The database is operable to store the final video sequence and to provide the final video sequence via a communication network. In this way, the final video sequence captured and/or edited by the video recording system can be easily distributed among a plurality of interested persons.

According to another aspect, the invention also provides a method of recording a video sequence of an object moving along a path, wherein the path comprises numerous path sections. The method comprises the steps of capturing a first video stream of the object while moving along a first path section of the path during a first time interval. This capturing of the first video stream is provided by a first camera. Thereafter and subsequently, there is captured a second video stream of the objected while moving along a second path section of the path during a second time interval. Capturing of the second video stream is provided and performed by a second camera.

Typically, the first camera and the second camera are spatially distributed and hence separated from each other. The first camera is installed to cover or to capture the first path section while the second camera is arranged and installed to capture and/or to cover the second path section. Typically, the method of recording a video sequence is to be implemented by using the video recording system as described above. Insofar, all features, benefits and effects as described above in connection with the video recording system equally apply to the method of recording a video sequence of a moving object; and vice versa.

According to an example, there is generated a final video sequence by merging or concatenating the first video stream and the second video stream as captured or recorded by the first and the second cameras, respectively. Merging or concatenating the individual video streams is provided by the acquisition unit of the video recording system. In the final video sequence, the first video stream and the second video stream are merged and/or concatenated on the basis of the associated first and second time intervals. Typically, the respective video sequences are merged or concatenated in a temporal sequence or temporal order.

According to a further example, the method of recording the video sequence of the object includes gathering motion data of the moving object by a motion detector. The motion data comprises at least one of a position, an orientation, a velocity or acceleration (see remarks above) of the object when moving along the path. The position, the orientation, the velocity or acceleration can be provided in numerous spatial dimensions.

According to a further example, at least one of capturing of the first video stream and capturing of the second video stream, controlling or operating of at least one of the first camera and the second camera and editing of at least a first video stream and a second video stream to generate a final video sequence is controlled on the basis of the motion data of the moving object as gathered by the motion detector. This way there can be provided a rather automated capturing of first and second video streams, and a rather automated editing of a final video sequence including the first video stream and the second video stream.

According to another aspect, the present invention also relates to a computer program configured for a video recording system as described above. The computer program comprises, computer readable instructions, which when executed by a controller of the video recording system cause the controller to carry out the steps of the method as described above, namely to carry out a capturing of a first video stream of the object while moving along a first path section of the path during a first time interval and to capture a second video stream of the object while moving along a second path section of the path during a second time interval.

Typically, the computer program is to be executed by a controller of the video recording system as described above. Insofar, all features, effects and vendor visual aspects as described above in connection with the video recording system equally apply to the computer program; and vice versa.

The controller of the video recording system may comprise at least one the acquisition unit, the camera controller as well as the motion detector as described above. With some examples, the acquisition unit, the camera controller and the motion detector may be integrated in a common hardware component denoted as the controller of the video recording system.

### Brief description of the drawings

In the following, numerous examples of the system and the method of tracking an item of a sports activity are illustrated in greater detail by making reference to the drawings, in which:
- Figure 1: schematically illustrates a block diagram of the video recording system,
- Figure 2: schematically illustrates a block diagram of a portable electronic tag attachable to the moving object,
- Figure 3: is indicative of a final video sequence as provided or automatically edited by the video recording system,
- Figure 4: shows a video stream with embedded image overlay, and
- Figure 5: is illustrative of a flowchart of executing the method of recording a video sequence.

### Detailed description

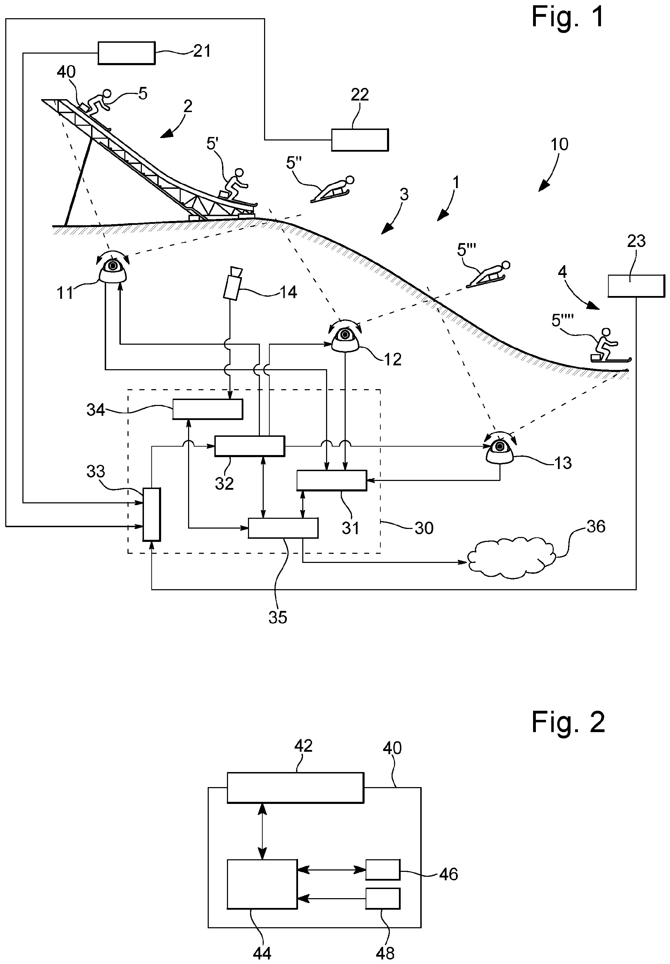

In the illustration of Figure 1, there is shown a video recording system 10 operable to capture or to record movement of an object 5 along a path 1. As illustrated, the path 1 is divided in numerous path sections 2, 3, 4. The path section 2 is a first path section defined by the ramp or hill of a ski jumping arena. The path section 3 represents a second path section, namely the jumping hill and the path section 4 represents a third path section, namely a landing zone.

The video recording system 10 as illustrated in Figure 1 comprises a first camera 11, a second camera 12 and a third camera 13. The first camera 11 is operable to capture the first path section 2. The second camera 12 is operable to capture the second path section 3 and the third camera 13 is operable to capture the third path section 4.

In the illustration of Figure 1, an athlete, hence an object 5 is shown in four different states of movement. At the beginning the object 5 is at or near a starting point and is hence in a phase of an inrun. The object 5' illustrates the athlete at the end of the ramp and short before take off. The object 5" shows the athlete at the beginning of the flight phase. At the end of the flight phase the athlete is shown as 5"' and in the landing zone the athlete 5"" has reached the end of the path 1.

As illustrated in Figure 1, the first camera 11 is operable to capture the movement of the object 5 as it moves along the first path section 2. The second camera 12 is configured to capture the moving object 5" and the object 5"' as it moves along the second path section 3 and the further camera 13 is configured to capture and to record movement of the object 5"' in the third path section 4 and hence during the landing.

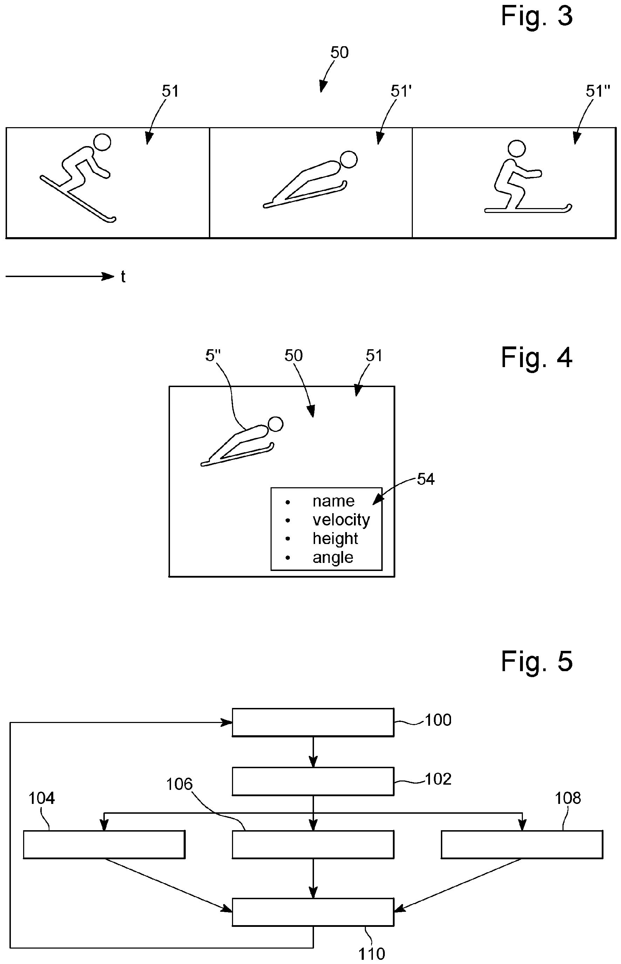

The video recording system 10 as illustrated in Figure 1 comprises a controller 30 by way of which the individual cameras 11, 12, 13 can be controlled in order to generate an edited final video sequence 50 as illustrated in Figure 3 showing the object 5 during the different phases of movement along the path 1 at different times t. The controller 30 comprises a camera controller 32 connected with each of the cameras 11, 12, 13. By way of the camera controller 32, the individual cameras 11, 12, 13 may be activated or deactivated to capture or to record respective video streams.

The camera controller 32 may be further operable to move or to reconfigure at least one of the cameras 11, 12, 13. When the cameras 11, 12, 13 are implemented as an actively movable, pivotable, zoomable or tiltable camera, the camera controller 32 may submit respective controlling signals so as to modify the respective camera configurations, e.g. in terms of a zoom configuration, a position and an orientation or tilt. The controller 30 may be further coupled with a high-speed camera 14. For this, the camera controller 30 may be provided with a respective high-speed acquisition unit 34. The high-speed camera 14 and/or the acquisition unit 34 may be also controlled by the camera controller 32.

The controller 30 further comprises an acquisition unit 31. The acquisition unit is connected to the cameras 11, 12, 13 and optionally also with the high-speed camera 14. The acquisition unit 31 is operable to capture or to receive the individual video streams 51, 51' as generated and provided by the individual cameras 11, 12, 13. The acquisition unit 31 is further coupled or connected in a signal transmitting way with a database 35.

The database 35 provides storage space for storing the finals video sequence 50 as provided by the acquisition unit 31. The acquisition unit 31 is typically implemented to select individual video streams 51, 51' as provided by the at least two cameras 11, 12 and to switch between e.g. a first video stream 51 one as provided by the first camera 11 and a second video stream 51' as provided by the second camera.

Additionally, there is provided a motion detector 33 by way of which motion data of the moving object 5 can be determined, detected or acquired. Typically, the motion detector 33 is provided with a number of receivers 21, 22, 23. The receivers are arranged along the path 1. In the present illustration the receiver 21 is arranged at or close to the first path section 2. The receiver 22 is arranged at or close to the second path 3 and the receiver 23 is arranged at or close to the third path section 4 of the path 1.

The receivers 21, 22, 23 are operable to communicate with a portable electronic tag 40 attached to the moving object 5. In this way, the movement of the moving object 5 can be tracked and quantitatively measured by the receivers 21, 22, 23 and by the motion detector 33. Typically, the motion detector 33 is operable to gather motion data of the object 5 as the object moves along the path 1. Motion data comprises at least one of a position, an orientation, a velocity and an acceleration of the object 5.

With some examples, the portable electronic tag 40 is attached to the athlete. With other examples, the portable electronic tag is implemented in or attached to the sports gear. Similarly, there is provided not only one but also several portable electronic tags, e.g. implemented in a left ski and a right ski.

In Figure 2, a block diagram of a tag 40 is schematically illustrated. The tag 40 comprises a transponder or transmitter 42 and a processor 44. The tag 40 may further comprise a storage 46 and a sensor 48. In the storage 46 there may be provided or stored a unique identifier by way of which the tag 40 can be identified by the motion detector 33. The sensor 48 may be implemented as a position or acceleration sensor. In this way a state of momentary movement or acceleration present to the portable electronic tag can be precisely measured. Measurement signals of the motion sensor 48 can be directly transmitted by the transponder 42 to the respective receivers 21, 22, 23. In this way there can be gathered real-time information about the momentary status of motion of the object during its movement along the path 1.

The motion data and/or identification data captured by the motion detector 33 may comprise data such as name, nation of the athlete and time of date, a velocity, a distance, a height over ground an angle of attack of a left ski and/or of a right ski, an opening angle of the skis, a roll angle of the skis as well as wind and gate information that may be present to the controller 30.

An example of final video sequence 50 generated by the acquisition unit 31 and stored in the database 35 is illustrated in Figure 3. Here, it is explicitly shown, that during a first time interval the video sequence 50 comprises a first video stream 51 as provided by the first camera 11. Thereafter, there follows a second video stream 51' as captured by the second camera 12 and finally there follows another video stream 51" as recorded by the third camera 13.

In Figure 4, an image overlay 54 in the final video sequence 50 is schematically illustrated. Based on the motion data as gathered by the motion detector 33 respective information about the athlete or moving object 5 can be overlaid in the final video sequence 50 or in any of the individual video streams 51, 51', 51".

Finally and in Figure 5, an exemplary flowchart of a method of recording a video sequence is illustrated. Here, in a first step 100 the moving object 5 is detected by the motion detector 33. In a subsequent step 102 motion data as captured by the motion detector 33 is evaluated and analyzed. Based on this analysis it is then determined in which one of the path sections 2, 3, 4 the moving object 5 is currently located. Based on the motion data, e.g. based on the position of the moving object 5 one of a number of available cameras 11, 12, 13 is selected and/or activated for image or video stream acquisition in step 104, 106, 108. Here, in step 104, the first camera 11 is selected. Alternatively, in step 106 the second camera 12 is selected and further alternatively in step 108 the third camera 13 is selected.

Thereafter and in step 110, a video stream generated and provided by the selected camera 11, 12, 13 is transmitted to the acquisition unit 31 and is recorded in the final video sequence 50. Thereafter, the method returns to step 100 and the procedure continues as long as the object 5 is located in the same path section. If it should be determined in step 102 that the object 5 has left the path section, e.g. path section 2 and enters another path section, e.g. path section 3, there will then be selected another camera 12 to capture a respective video stream 51' from this newly selected path section 3.

### Reference Numbers

- 1: path
- 2: path section
- 3: path section
- 4: path section
- 5: object
- 10: recording system
- 11: camera
- 12: camera
- 13: camera
- 14: high-speed camera
- 21: receiver
- 22: receiver
- 23: receiver
- 30: controller
- 31: acquisition unit
- 32: camera controller
- 33: motion detector
- 34: high-speed acquisition unit
- 35: database
- 40: tag
- 42: transponder
- 44: processor
- 46: storage
- 48: sensor
- 50: video sequence
- 51: video stream
- 54: image overlay

## Claims

1. A video recording system (10) configured for capturing an object (5) moving along a path (1) comprising numerous path sections (2, 3, 4), the video recording system (10) comprising:
- a first camera (11) operable to capture the object (5) while moving along a first path section (2) of the path (1),
- a second camera (12) operable to capture the object (5) moving along a second path section (3) of the path (1),
- an acquisition unit (31) connected to the first camera (11) and connected to the second camera (12), the acquisition unit (31) being operable to capture a first video stream (51) from the first camera (11) during a first time interval and to capture a second video stream (51') from the second camera (12) during a second time interval.

2. The video recording system (10) according to claim 1, wherein the acquisition unit (31) being further operable to generate a final video sequence (50) by merging or concatenating the first video stream (51) and of the second video stream (51').

3. The video recording system (10) according to claim 1 or 2, further comprising a camera controller (32) connected to the first camera (11) and connected to the second camera (12) and being operable to control operation of the first camera (11) and the second camera (12), respectively.

4. The video recording system (10) according to any one of the preceding claims, further comprising a motion detector (33) operable to gather motion data of the object (5), wherein the motion data comprises at least one of a position, an orientation, a velocity and an acceleration of the object (5) when moving along the path (1).

5. The video recording system (10) according to claim 4, wherein the motion detector (33) is operably connected with at least one of the acquisition unit (31) and the camera controller (32) to control capturing of the first video stream (51) and of the second video stream (51') on the basis of the motion data of the object (5).

6. The video recording system (10) according to claim 3 and any one of the claims 4 or 5, wherein the motion detector (33) is operably connected to the camera controller (32), wherein at least one of the first camera (11) and the second camera (12) is at least one of movable, pivotable, zoomable or tiltable by the camera controller (32) to dynamically follow the object (5) on the basis of the motion data as provided by the motion detector (33).

7. The video recording system (10) according to any one of the preceding claims 4 to 6, wherein the acquisition unit (31) is operably connected to the motion detector (33) and wherein the acquisition unit (31) is operable to produce an image overlay (54) comprising motion data of the object (5) extracted from the motion detector (33) and to add the image overlay (54) in at least one of the first video stream (51) and the second video stream (51').

8. The video recording system (10) according to any one of the preceding claims 4 to 7, wherein the motion detector (33) is operable to capture motion data of a portable electronic tag (40) connectable to the moving object (5).

9. The video recording system (10) according to claim 8, wherein the portable electronic tag (40) comprises a transponder (42) operable to exchange data and/or signals wirelessly with the motion detector (33).

10. The video recording system (10) according to claim 8 or 9, wherein the motion detector (33) is operably connected to at least one or several wireless receivers (21, 22, 23) arranged along the path (1) and operable to exchange data with the portable electronic tag (40).

11. The video recording system (10) according to any one of the preceding claims 2 to 10, further comprising a database (35) connected to the acquisition unit (31), the database (35) being operable to store the final video sequence (50) and to provide the final video sequence (50) via a communication network (36).

12. A method of recording a video sequence of an object (5) moving along a path (1), wherein the path (1) comprises numerous path sections (2, 3, 4) the method comprising the steps of:
- capturing a first video stream (51) of the object (5) while moving along a first path section (2) of the path (1) during a first time interval by a first camera (11),
- capturing a second video stream (51') of the object (5) while moving along a second path section (3) of the path (1) during a second time interval by a second camera (12).

13. The method according to claim 12, further comprising the step of generate a final video sequence (50) by merging or concatenating the first video stream (51) and the second video stream (51').

14. The method according to claim 12 or 13, further comprising the step of gathering motion data of the moving object (5) by a motion detector (33), wherein the motion data comprises at least one of a position, an orientation, a velocity or acceleration of the object (5) when moving along the path (1).

15. A computer program configured for a video recording system (10) according to any one of the preceding claims 1-11 and comprising computer readable instructions, which when executed by a controller (30) of the video recording system (10) cause the controller (30) to carry out the steps of the method according to any one of the preceding claims 12 to 14.
